# EUROPEAN PATENT SPECIFICATION

(11) **EP 1 162 128 B1**
(45) Date of publication and mention of the grant of the patent: **22.09.2004**
(21) Application number: 01113706.4
(22) Date of filing: 04.06.2001
(51) Int. Cl.: B62D 33/06

(54) **Bunk , particularly for vehicles**
Schlafliege , insbesondere für Fahrzeugen
Couchette , spécialement pour véhicules

(30) Priority: 06.06.2000 IT TO000542
(43) Date of publication of application: 12.12.2001
(73) Proprietor: SELMAT AUTOMOTIVE S.R.L., 10090 Cascine Vica - Rivoli (IT)
(72) Inventor: Maccherrone, Michele, 10090 Cascine Vica-Rivoli (IT)
(74) Representative: Bongiovanni, Simone

(56) References cited:
- EP-A- 0 318 871
- FR-A- 2 519 532
- US-A- 4 989 281
- US-A- 5 638 560

## Description

The present invention relates to a bunk, particularly for vehicles, to which the following description refers purely by way of example.

Many vehicles, including industrial vehicles, are equipped with bunks to enable the driver to rest or to spend the night in the vehicle on journeys lasting more than one day. Such bunks are normally fitted to a supporting structure, to a lateral wall of the driver's cab in the case of industrial vehicles, and comprise a frame, in turn comprising a normally rigid, metal peripheral portion, across the inside of which straps are stretched to define, together with the peripheral portion, a supporting surface for a mattress. Alternatively, the straps may be replaced by a metal bedspring connected in various ways to the peripheral portion, or by a panel, normally of masonite.

Though widely used, known bunks of the type described above have the drawback of becoming extremely uncomfortable after a fairly short period of use, mainly on account of the gradual reduction, with use, in the > elasticity and resistance of the straps, bedspring or masonite panel, so that the initial comfort of the bunk is soon impaired. In other words, using flexible members, such as straps and/or bedsprings fails to provide for a invariable supporting surface for the mattress.

Known bunks of the above type are also heavy, relatively expensive to assemble, and are difficult to recycle at the end of their working life.

A bunk according the preamble of claim 1 is known from the document US-A-5638560.

It is an object of the present invention to provide a bunk designed to provide a straightforward, low-cost solution to the problems posed by the known state of the art.

According to the present invention, there is provided a bunk as defined by claim 1.

A number of non-limiting embodiments of the invention will be described by way of example with reference to the accompanying drawings, in which:
Figure 1 shows a view in perspective of a preferred embodiment of the bunk according to the invention fitted to a supporting structure of a vehicle;
Figure 2 shows an exploded view in perspective of a first preferred embodiment of the Figure 1 bunk;
Figure 3 shows a variation of a detail in Figure 2;
Figure 4 shows an exploded view in perspective of a second preferred embodiment of the Figure 1 bunk.

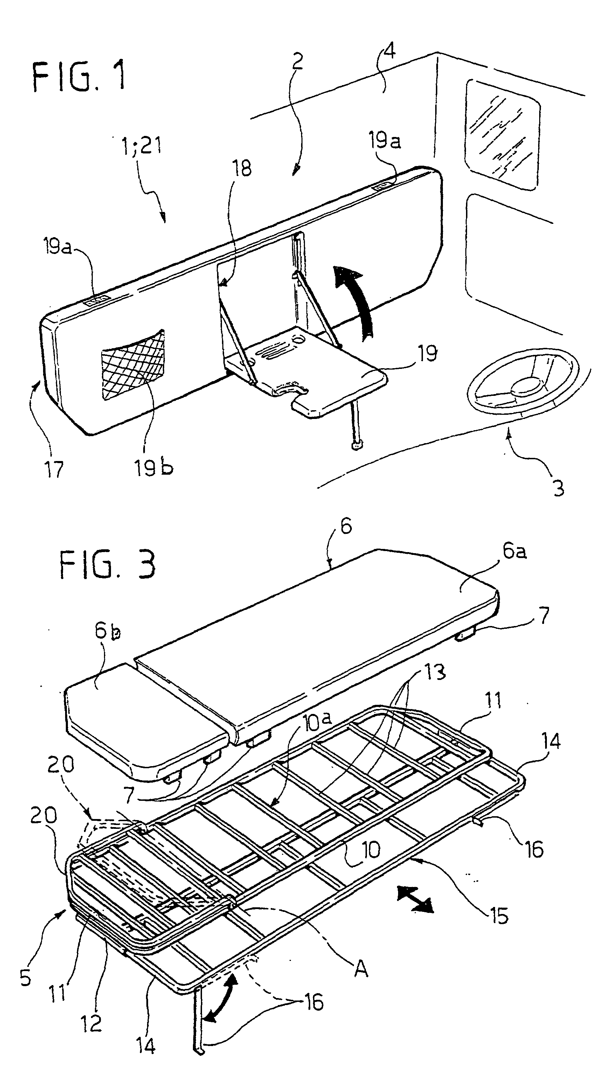

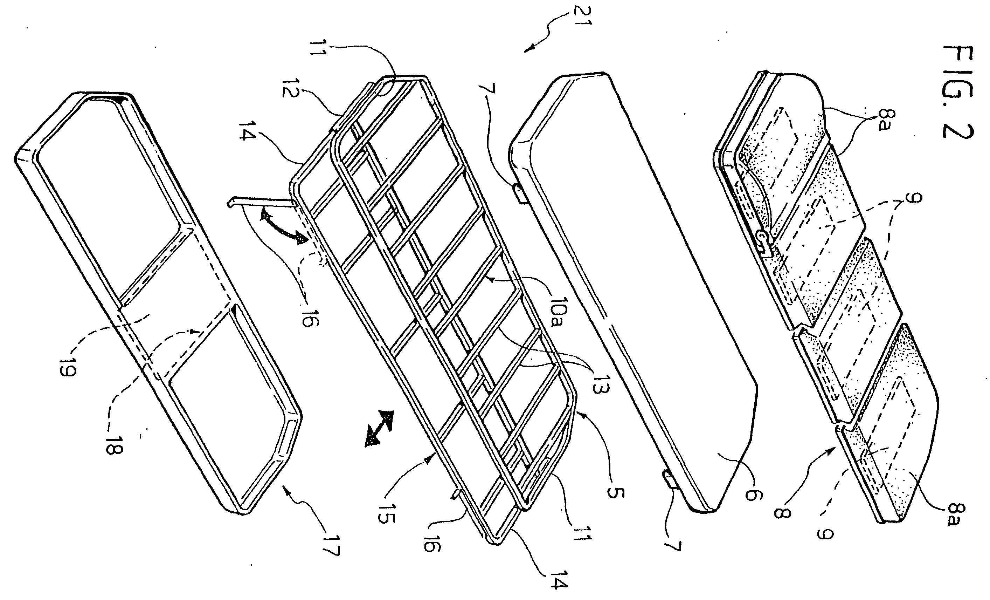

Number 1 in Figure 1 indicates as a whole a bunk housed in a driver's cab 2 of an industrial vehicle 3. In the particular example described, bunk 1 is hinged to a lateral wall 4 of cab 2 to rotate from a lowered work position to a raised stowed position (Figure 1) extending in contact with wall 4.

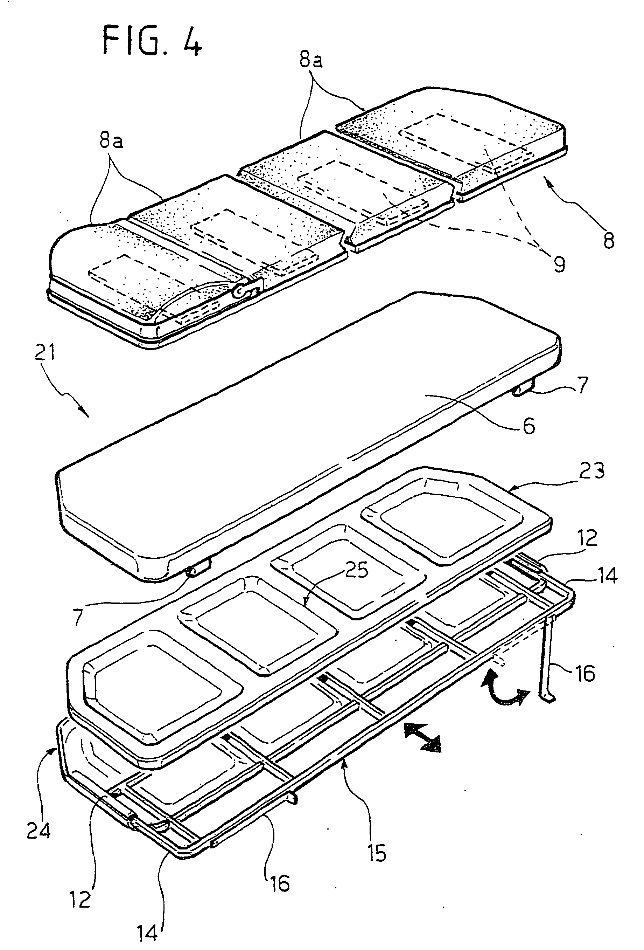

Bunk 1 comprises a frame 5 (Figures 2 and 3) made of metal or light alloy; and a platelike body 6 of polypropylene foam. In the Figure 2 example, body 6 is placed on top of frame 5 and is connected to frame 5 by known fastening appendixes 7. Body 6 defines a supporting surface for a mattress 8 preferably made of latex or of polyurethane of constant density or varying in density from one portion to another to vary the stiffness of the mattress in predetermined manner. For this purpose, mattress 8, as shown in Figures 2 and 4, comprises a number of cushionlike bodies 8a, either separate or hinged to rotate with respect to one another. Regardless of the specific embodiment, mattress 8 houses a number of known electric resistors 9 connectable to an electric circuit to heat mattress 8.

In the particular example described, frame 5 comprises a rectangular peripheral portion 10 having two short sides 11, each associated with a respective guide 12; and a rigid central portion 10a defined by a number of metal rods 13, which, in the example shown, are straight and parallel. Each guide 12 is fitted in axially sliding manner with a respective slide portion 14 of a supporting body 15 movable, with respect to frame 5, between an extracted position (Figure 2) and a withdrawn position extending, in use, beneath frame 5 and inside bunk 1. Body 15 can be employed by the user as a supporting base, and forms part of a floor stand of frame 5, by comprising two legs 16 hinged to portion 10 and movable to and from a work position extending in the form of a brace between portion 10 and the vehicle floor.

With reference to Figure 2, frame 5 and body 15 are concealed externally by a contoured hollow body 17 fitted to frame 5 in known manner and made of thermoplastic material or recycled materials or materials derived from differential refuse collection. In the particular example described, hollow body 17 defines a seat 18 communicating, in use, with the outside and housing a table 19 which can be pulled out of seat 18 when bunk 1 is in the raised stowed position (Figure 1). To reduce the weight of bunk 1, table 19 preferably comprises two half-shells of plastic material sealed to each other along the respective peripheral edges. With reference to Figure 2, hollow body 17 comprises a further, outer, seat closed partly by a net to define a net pocket 19b, e.g. for holding magazines. The outer periphery of hollow body 17 has two or more outer seats, each for housing a respective light source 19a.

In the Figure 3 variation, in addition to portion 10, frame 5 also comprises a further rectangular metal portion 20 located at the head of bunk 1 and having one longitudinal end hinged to an intermediate point of portion 10 to rotate, with respect to portion 10 and about a hinge axis A perpendicular to the length of bunk 1, between a raised position in which portion 20 is tilted with respect to portion 10 as shown by the dash line in Figure 3, and a lowered position in which portion 20 extends on top of a head-end portion of portion 10 (Figure 3). To enable portion 20 to rotate freely with respect to portion 10, body 6 comprises two portions 6a and 6b resting on portion 10 and portion 20 respectively. In a variation not shown, portions 6a and 6b are hinged to each other, e.g. by a crease portion integral with portions 6a and 6b and defining a virtual hinge.

The Figure 4 embodiment relates to a bunk 21 differing in some respects from bunk 1, and the component parts of which are indicated using the same reference numbers as for the corresponding parts of bunk 1.

Bunk 21 differs from bunk 1 by having no metal frame 5, and by comprising two half-shells 23 and 24 made of polypropylene, conveniently reinforced with glass fibers and vacuum molded, or of rotational polyethylene, and connected integrally with each other to form a shell acting as a lightweight, substantially nondeformable frame. More specifically, half-shells 23 and 24 cooperate with each other to define a rigid supporting portion 25 on which polypropylene foam body 6 is placed and retained. Half-shell 24 comprises the two guides 12 engaged in sliding manner by body 15, and defines seat 18 for table 19, net pocket 19b, and the seats for light sources 19a.

As compared with known solutions, bunks 1 and 21 described are therefore not only of predetermined or predeterminable stiffness, but also, and above all, have functional characteristics which do not vary with time. This is mainly due to the presence of bodies 6, 23 and 24, and, in particular, to the materials from which bodies 6, 23 and 24 are made; which materials not only provide for a high degree of stiffness, but are also particularly suitable by being fireproof, damp-resistant, extremely lightweight and easily recycled.

Clearly, changes may be made to bunks 1 and 21 as described herein without, however, departing from the scope of the accompanying Claims.

For example, the elements defining the rigid frames may be formed otherwise than as shown and using different materials from those indicated, providing they ensure a supporting surface for the overlying mattress which is substantially rigid or of a predetermined flexibility which does not vary alongside use of the bunk.

Forming the frame in two molded shells provides for greatly reducing the weight of the bunk for a given stiffness and response to stress. The two half-shells, however, may define only an intermediate portion of the frame, which may comprise a peripheral portion made of different material from the two shells, e.g. metal. The two shells may even be replaced by a single monolithic body formed in one piece.

As stated, using frames in which the position of one supporting portion can be adjusted with respect to another provides for improving the comfort of the bunk, and enables the bunk to be used for other than simply rest purposes; and forming seats, pockets and/or various housings within the bunk structure provides for more efficient use of the space surrounding the bunk, and for placing miscellaneous articles within easy reach of the user.

The comfort of the bunk is also improved by the electric resistors inside the mattress or, in general, associated with the bunk.

In addition to industrial vehicle cabs, bunks 1, 21 described may, obviously, also be used for other vehicles, such as rescue vehicles or aircraft, or in various premises, such as hospitals.

## Claims

1. A bunk (1; 21), particularly for vehicles, comprising a frame (5; 23, 24) fitted to a supporting structure (4) and comprising an intermediate supporting portion (10a, 25) for an overlying mattress (8); said intermediate supporting portion (10a; 25) is a rigid portion; and the bunk also comprising an intermediate separating body (6) interposed between said intermediate supporting portion (10a; 25) and said mattress (8) and the bunk (1) being **characterized in that** the said intermediate separating body is made of polypropylene foam.

2. A bunk as claimed in Claim 1, **characterized in that** said frame (5) is a nondeformable metal frame.

3. A bunk as claimed in Claim 2, **characterized in that** said intermediate supporting portion (10a) comprises a number of straight, parallel rods (13).

4. A bunk as claimed in Claim 1, **characterized in that** at least said intermediate supporting portion (25) is made of polypropylene.

5. A bunk as claimed in Claim 4, **characterized in that** said polypropylene is reinforced with a number of glass fibers.

6. A bunk as claimed in Claim 5, **characterized in that** said intermediate supporting portion (25) forms part of a hollow body (23, 24) made entirely of polypropylene.

7. A bunk as claimed in Claim 5 or 6, **characterized in that** said hollow body comprises two contoured half-shells (23)(24) connected integrally to each other at least along their peripheral edges.

8. A bunk as claimed in any one of Claims 4 to 7, **characterized in that** said hollow body defines the whole of said frame (23, 24).

9. A bunk as claimed in Claim 1, **characterized in that** said frame (23, 24) is made of rotational polyethylene.

10. A bunk as claimed in any one of the foregoing Claims, **characterized by** comprising at least one supporting surface (15; 19) movable between an extracted position, and a withdrawn position in which said supporting surface extends completely inside said bunk (1; 21).

11. A bunk as claimed in Claim 10, **characterized in that** the extractable said supporting surface (15) is connected in sliding manner to said frame (5; 23, 24).

12. A bunk as claimed in any one of the foregoing Claims, **characterized by** comprising a seat (18) communicating with the outside; and a table (19) housed inside the seat (18) and extractable from the seat (18) when the bunk (1; 21) is in a raised stowed position.

13. A bunk as claimed in any one of the foregoing Claims, **characterized by** comprising at least one optical assembly (19a) for emitting a light beam.

14. A bunk as claimed in any one of the foregoing Claims, **characterized by** also comprising a further supporting portion (20) connected to the frame (5) and adjustable with respect to the frame (5).

## Patentansprüche

1. Eine Schlafstelle (1; 21), insbesondere für Fahrzeuge, umfassend einen an eine Tragkonstruktion (4) angepassten Rahmen (5; 23, 24), der einen Zwischenstützteil (100, 25) für eine darüber liegende Matratze (8) umfaßt; wobei der Zwischenstützteil (100; 25) ein steifes Teil ist; und die Schlafstelle außerdem einen Zwischentrennkörper (6) umfaßt, der zwischen den Zwischenstützteil (100; 25) und die Matratze (8) eingelegt ist, und wobei die Schlafstelle (1) **dadurch gekennzeichnet ist, daß** der Zwischentrennkörper aus Polypropylen-Schaum gefertigt ist.

2. Eine Schlafstelle nach Anspruch 1, **dadurch gekennzeichnet, daß** der Rahmen (5) ein unverformbarer Metallrahmen ist.

3. Eine Schlafstelle nach Anspruch 2, **dadurch gekennzeichnet, daß** der Zwischenstützteil (100) eine Anzahl gerader, paralleler Stäbe (13) umfaßt.

4. Eine Schlafstelle nach Anspruch 1, **dadurch gekennzeichnet, daß** wenigstens der Zwischenstützteil (25) aus Polypropylen gefertigt ist.

5. Eine Schlafstelle nach Anspruch 4, **dadurch gekennzeichnet, daß** das Polypropylen mit einer Anzahl von Glasfasern verstärkt ist.

6. Eine Schlafstelle nach Anspruch 5, **dadurch gekennzeichnet, daß** der Zwischenstützteil (25) Teil eines ganz aus Polypropylen gefertigten Hohlkörpers (23, 24) bildet.

7. Eine Schlafstelle nach Anspruch 5 oder 6, **dadurch gekennzeichnet, daß** der Hohlkörper zwei konturierte Halbschalen (23) (24) umfaßt, die zumindest entlang ihrer Umfangsränder einstückig miteinander verbunden sind.

8. Eine Schlafstelle nach einem der Ansprüche 4 bis 7, **dadurch gekennzeichnet, daß** der Hohlkörper die Gesamtheit des Rahmens (23, 24) bestimmt.

9. Eine Schlafstelle nach Anspruch 1, **dadurch gekennzeichnet, daß** der Rahmen (23, 24) aus Rotationspolyethylen gefertigt ist.

10. Eine Schlafstelle nach einem der voranstehenden Ansprüche, **dadurch gekennzeichnet, daß** sie wenigstens eine Ablagefläche (15; 19) umfaßt, die zwischen einer ausgezogenen Position und einer zurückgezogenen Position, in der die Ablagefläche vollständig innerhalb der Schlafstelle (1; 21) verläuft, beweglich ist.

11. Eine Schlafstelle nach Anspruch 10, **dadurch gekennzeichnet, daß** die ausziehbare Ablagefläche (15) in gleitbarer Weise mit dem Rahmen (5; 23, 24) verbunden ist.

12. Eine Schlafstelle nach einem der voranstehenden Ansprüche, **dadurch gekennzeichnet, daß** sie einen mit der Außenseite kommunizierenden Sitz (18); und einen im Inneren des Sitzes (18) aufgenommenen Tisch (19) umfaßt, der aus dem Sitz (18) ausziehbar ist, wenn sich die Schlafstelle 1; 21) in einer angehobenen Verstauposition befindet.

13. Eine Schlafstelle nach einem der voranstehenden Ansprüche, **dadurch gekennzeichnet, daß** sie wenigstens eine Einheit (19a) zum Aussenden eines Lichtbündels umfaßt.

14. Eine Schlafstelle nach einem der voranstehenden Ansprüche, **dadurch gekennzeichnet, daß** sie außerdem einen weiteren Stützteil (20) umfaßt, der mit dem Rahmen (5) verbunden und mit Bezug auf den Rahmen (5) einstellbar ist.

## Revendications

1. Couchette (1 ; 21), spécialement pour véhicules, comprenant un cadre (5 ; 23 ; 24) adapté à une ossature support (4) et comprenant une partie support intermédiaire (10a, 25) pour un matelas sus-jacent (8), ladite partie support intermédiaire (10a ; 25) étant une partie rigide ; et la couchette comprenant également un corps de séparation intermédiaire (6) intercalé entre ladite partie support intermédiaire (10a ; 25) et ledit matelas (8), la couchette (1) et étant **caractérisée en ce que** ledit corps de séparation intermédiaire est fabriqué en mousse de polypropylène.

2. Couchette selon la revendication 1 **caractérisée en ce que** le cadre (5) est un cadre métallique indéformable.

3. Couchette selon la revendication 2 **caractérisée en ce que** ladite partie support intermédiaire (10a) comprend un certain nombre de tiges parallèles et droites (13).

4. Couchette selon la revendication 1 **caractérisée en ce qu'**au moins ladite partie support intermédiaire (25) est faite en polypropylène.

5. Couchette selon la revendication 4 **caractérisée en ce que** ledit polypropylène est renforcé par un certain nombre de fibres de verre.

6. Couchette selon la revendication 5 **caractérisée en ce que** ladite partie support intermédiaire (25) fait partie d'un corps creux (23, 24) entièrement fait en polypropylène.

7. Couchette selon la revendication 5 ou 6 **caractérisée en ce que** ledit corps creux comprend deux demi-coques profilées (23) (24) reliées intégralement l'une à l'autre au moins le long de leurs bords périphériques.

8. Couchette selon l'une quelconque des revendications 4 à 7 **caractérisée en ce que** ledit corps creux définit l'intégralité dudit cadre (23, 24).

9. Couchette selon la revendication 1 **caractérisée en ce que** ledit cadre (23, 24) est fait en polyéthylène obtenu par rotomoulage.

10. Couchette selon l'une quelconque des revendications précédentes **caractérisée par le fait qu'**elle comprend au moins une surface support (15 ; 19) mobile entre une position extraite et une position repliée dans laquelle ladite surface support s'étend complètement à l'intérieur de ladite couchette (1 ; 21).

11. Couchette selon la revendication 10 **caractérisée en ce que** ladite surface support (15) pouvant être extraite est reliée de manière coulissante audit cadre (5 ; 23 ; 24).

12. Couchette selon l'une quelconque des revendications précédentes **caractérisée par le fait qu'**elle comprend un siège (18) communiquant avec l'extérieur ; et d'une table (19) logée à l'intérieur du siège (18) et pouvant être extraite du siège (18) lorsque la couchette (1 ; 21) est en position rentrée relevée.

13. Couchette selon l'une quelconque des revendications précédentes **caractérisée par le fait qu'**elle comprend au moins un dispositif optique (19a) pour émettre un faisceau lumineux.

14. Couchette selon l'une quelconque des revendications précédentes **caractérisée par le fait qu'**elle comprend également une autre partie support (20) reliée au cadre (5) et pouvant être réglée par rapport au cadre (5).
